# EUROPEAN PATENT SPECIFICATION

(11) **EP 2 480 013 B1**
(45) Date of publication and mention of the grant of the patent: **10.07.2019**
(21) Application number: 11782864.0
(22) Date of filing: 25.01.2011
(51) Int. Cl.: H04W 4/70, H04W 4/08

(54) **METHOD AND SYSTEM FOR REALIZING APPLICATION OF MACHINE-TO-MACHINE/MAN TERMINAL BASED ON GROUPS**
VERFAHREN UND SYSTEM ZUR DURCHFÜHRUNG VON MACHINE-TO-MACHINE / MENSCH-ENDGERÄT AUF GRUPPENBASIS
PROCÉDÉ ET SYSTÈME PERMETTANT DE RÉALISER UNE APPLICATION D'UN TERMINAL DE COMMUNICATION ENTRE MACHINES BASÉE SUR DES GROUPES

(30) Priority: 19.05.2010 CN 201010179788
(43) Date of publication of application: 25.07.2012
(73) Proprietor: ZTE Corporation, Shenzhen, Guangdong 518057 (CN)
(72) Inventor: TANG, Dingmei, Shenzhen Guangdong 518057 (CN)
(74) Representative: CMS Cameron McKenna Nabarro Olswang LLP
(86) International application number: PCT/CN2011/070605
(87) International publication number: WO 2011/143947

(56) References cited:
- WO-A2-2009/092115
- CN-A- 101 180 852
- CN-A- 101 558 664
- US-A1- 2005 108 504
- "Machine- to- Machine communications (M2M); Functional architecture", ETSI DRAFT; DRAFT_ARCHITECTURE_TS POST M2M#8 REV MARKS, EUROPEAN TELECOMMUNICATIONS STANDARDS INSTITUTE (ETSI), 650, ROUTE DES LUCIOLES ; F-06921 SOPHIA-ANTIPOLIS ; FRANCE, no. V0.1.3, 23 February 2010 (2010-02-23), pages 1-53, XP014050802, [retrieved on 2010-02-23]

## Description

### Technical Field

The present invention relates to M2M (Machine-to-Machine/Man) technology, and particularly to a method and a system for implementing applications by an M2M terminal based on groups.

### Background of the Related Art

M2M is a kind of networking application and service with the machine terminal intelligent interaction being a core. It provides an integrated information technology scheme to customers by embedding a radio communication module into a machine and taking radio communication and the like as the way of accessing, so as to satisfy informationization requirements of customers for monitoring, commanding scheduling, data gathering and measuring, and so on.

With a development of M2M technology, the number of the M2M terminals would increase continuously. Thus when the application platform initiates an application to an M2M terminal in the M2M platform, a large amount of communication message for the relatively independent M2M terminals would be transmitted between the application platform and the M2M platform, too much system resource of either application platform or the M2M platform will be occupied for processing a large amount of communication message, which will cause a lower processing efficiency for the applications.

The features of the preamble of the independent claims are known from US 2005/108504 A1. Related technologies are also known from "Machine-to-Machine communications (M2M); Functional architecture", ETSI DRAFT; DRAFT_ARCHITECTURE_TS POST M2M#8 REV MARKS, EUROPEAN TELECOMMUNICATIONS STANDARDS INSTITUTE (ETSI), 650, ROUTE DES LUCIOLES; F-06921 SOPHIA-ANTIPOLIS; FRANCE, no.V0.1.3, XP014050802.

### Summary of the Invention

In view of that, the main object of the present invention is to provide a method and system for implementing an application by an M2M terminal based on groups as defined in the independent claims, to improve the processing efficiency of the application.

In order to achieve the above object, the technical scheme of the present invention may be
implemented by way of:
A method for implementing an application by an M2M (Machine-to-Machine/Man) terminal based on groups, comprising:
setting groups including group terminals in both an M2M platform and an application platform, wherein there is a corresponding relationship between a group in the M2M platform and a group in the application platform;
based on the corresponding relationship, the terminals of the application platform and the M2M platform perform message interaction in groups.

The group set in the M2M platform and the group set in the application platform are formed by way of creating a new group and adding a group terminal.

A process of creating a new group in the M2M platform comprises:
dividing different terminals into different groups in the M2M platform and performing an operation of creating a new group, and then synchronizing an operation result to the application platform;
a process of adding a group terminal in the M2M platform comprises:
   determining a group to which a group terminal to be added belongs in the M2M platform, and performing an operation of adding a group terminal for the group terminal to be added, and then synchronizing an operation result to the application platform.

When the group terminal added in the M2M platform is a dynamic group terminal, the process of adding comprises:
after the terminal registers in the M2M platform successfully, adding the terminal into a corresponding dynamic group according to an application to which the terminal belongs and a rule established by the M2M platform.

A process of creating a new group in the application platform comprises:
for a new group to be created, the application platform initiating a verification request to the M2M platform, the M2M platform creating a new group according to the request of the application platform after the verification has been approved, and permitting the application platform to create a new group;
a process of adding a group terminal into the application platform comprises:
   for a group terminal to be added, the application platform initiates a verification request to the M2M platform, the M2M platform adding a group terminal according to the request of the application platform after the verification has been approved, and permitting the application platform to add a group terminal.

A process of the terminals of the application platform and the M2M platform perform message interaction in groups comprises:
the application platform sending an application message request to the M2M platform, the M2M platform initiating application message to the terminal in the group corresponding to the request, and sending an application processing result fed back by the terminal to the application platform.

A system for implementing an application by an M2M (Machine-to-Machine/Man) terminal based on groups, comprising an M2M terminal filtering module, an M2M platform group module, a synchronizing module and an application platform group module; wherein the synchronizing module is set in both the M2M platform and the application platform;
the M2M platform group module is used to maintain a group including group terminals of the M2M platform;
the application platform group module is used to maintain a group including group terminals of the application platform;
the synchronizing module is used to synchronize a group in the M2M platform and a group in the application platform during the process of maintaining;
the M2M terminal filtering module is used to implement a message interaction in groups between a terminal of the application platform and a terminal of the M2M platform, according to a corresponding relationship between a group in the M2M platform and a group in the application platform generated during a synchronization process performed by the synchronizing module.

Maintenance functions of the M2M platform group module and the application group module are implemented by way of creating a new group and adding a group terminal.

In a process of creating a new group in the M2M platform,
the M2M platform group module is used to divide different terminals into different groups, and perform an operation of creating a new group;
the synchronizing module is used to synchronize the operation result of creating a new group by the M2M platform group module to the application platform;
in a process of adding a group terminal into the M2M platform,
the M2M platform group module is used to determine a group to which the group terminal to be added belongs, and perform an operation of adding a group terminal for the group terminal to be added;
the synchronizing module is used to synchronize the operation result of adding a group terminal of the M2M platform group module to the application platform.

When the added group terminal is a dynamic group terminal, the M2M platform group module is used to:
after the terminal registers in the M2M platform successfully, add the terminal into a corresponding dynamic group according to an application to which the terminal belongs and a rule established by the M2M platform.

In a process of creating a new group in the application platform,
the application platform group module is used to initiate a verification request to the M2M platform for a new group to be created, and create a new group after the verification has been approved by the M2M platform;
in a process of adding a group terminal into the application platform,
the application platform group module is used to the initiate a verification request to the M2M platform for a group terminal to be added, and add a group terminal after the verification has been approved by the M2M platform.

In a process of a terminal of the application platform and a terminal of the M2M platform perform the message interaction in groups,
the application platform group module is used to send an application message request to the M2M platform;
the M2M platform group module is used to initiate application message to the terminal in the group corresponding to the application message request, and send an application processing result fed back by the terminal to the application platform group module.

The technology for grouping and filtering is adopted in the present invention, so that the application platform only needs to send message including a group id to the M2M platform, and the M2M platform may forward the received message to a corresponding terminal according to a group id corresponding relationship. Thus, it may ensure that a large amount of communication message would not be transmitted between the application platform and the M2M platform for the relatively independent M2M terminals, while a relatively little amount of communication message would be transmitted under the premise of dividing groups, therefore the processing efficiency of operations performed on the application by the application platform and the M2M platform may be effectively improved. Also, by way of dynamic groups and static groups provided by the M2M platform, a flexible management for the groups can be implemented by the M2M platform; in addition, the application platform may supplement groups actively, which facilitates the application platform using the groups to implement the applications more flexibly.

### Brief Description of Drawings

FIG. 1 is a diagram of a system for implementing an application by an M2M terminal based on groups according to an embodiment of the present invention;
FIG. 2 is a flowchart of changing a group by an M2M platform according to an embodiment of the present invention;
FIG. 3 is a flowchart of changing a group terminal by an M2M platform according to an embodiment of the present invention;
FIG. 4 is a flowchart of adding a dynamic group terminal by an M2M platform according to an embodiment of the present invention;
FIG. 5 is a flowchart of changing a group by an application platform according to an embodiment of the present invention;
FIG. 6 is a flowchart of changing a group terminal by an application platform according to an embodiment of the present invention;
FIG. 7 is a flowchart of implementing an application by an M2M terminal based on groups according to an embodiment of the present invention;
FIG. 8 is a schematic flowchart of implementing an application by an M2M terminal based on groups.

### Preferred Embodiments of the Present Invention

Grouping technology is adopted in the present invention, the specific grouping for the groups relates to static groups and dynamic groups. The static group refers to a group that can be maintained on an interface, a terminal of that group needs to be maintained manually; of course, for a static group with a set group condition, the included terminal may be generated automatically according to the condition. The dynamic group refers to a group pre-generated according to a certain rule, and terminals of the group are added automatically into the group according to a certain rule and generally change dynamically.

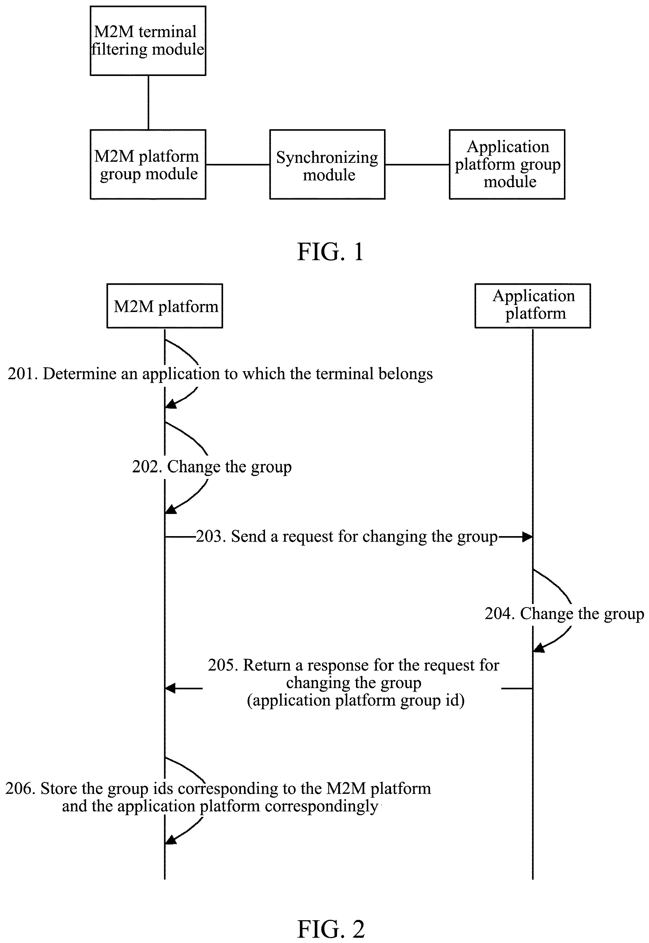

Refer to FIG. 1, which is a diagram of a system for implementing an application by an M2M terminal based on groups according to an embodiment of the present invention; this system includes an M2M terminal filtering module, an M2M platform group module, a synchronizing module and an application group module connected; wherein the M2M terminal filtering module and the M2M platform group module are set in the M2M platform, the synchronizing modules are set in both the M2M platform and the application platform, the application platform group module is set in the application platform.

Specifically, the M2M terminal filtering module is mainly used to add a successfully registered terminal into a dynamic group in the M2M platform according to filtering conditions; and is used to filter out a terminal that needs to forward the message from the group according to the message including the group sent to the M2M platform by the application platform.

The M2M platform group module mainly maintains a group in the M2M platform and a terminal in the group, such as: changing the group, changing the group terminal, and so on.

The synchronizing module is mainly used to synchronize the group in the M2M platform and the group in the application platform.

The application platform group module is mainly used to maintain a group in the application platform, such as: changing the group, changing the group terminal, and so on.

In practical application, the main idea of implementing an application by the M2M terminal based on groups comprises:
the M2M platform creates a new group:
there are two ways of creating a new group, one is to create a new static group on the interface of the M2M platform by a manager, the other one is to generate a dynamic group by the M2M platform according to a certain rule, after that, the M2M platform initiates request message for changing a group to the application platform, to implement a synchronization of groups of the application platform and the M2M platform. It should be noted that, creating the new static group also supports two ways, one is directly adding a group (which does not require a selection condition) name by a manager, and the other is setting a certain rule condition for the new group when the new group is added by the manager.

Group terminals are added into the group:
Group terminals are added into the static group and the dynamic group respectively. In the case that group terminals are added into the static group without a set condition, a manager may add a new group terminal on an interface of the M2M platform. In the case that a group terminal is added into a static group with a set condition, the system may add a new terminal that satisfies the condition into the group according the condition set by the group after the group terminal registers successfully; after the successful addition, the M2M platform may initiate request message for changing a group terminal to the application platform.

In addition, in the case that a group terminal is added into a dynamic group, after the terminal registers successfully, the M2M platform may add the terminal into a corresponding group according to a certain rule, and synchronizes the change of the dynamic group terminal to the application platform.

What is described above is the case that the M2M platform changes a group and a group terminal. Next, the case that the application platform changes a group and a group terminal will be described. Because the M2M platform has a function of dynamic group, it realizes the synchronization to an application platform.

The application platform newly creates a group:
For a newly group created by itself, the application platform supports only a static group, and the group newly created by the application platform could come into effect after the verification has been approved by the M2M platform.

The application platform newly creates a group terminal:
For a group without a set condition, a manager of the application platform needs to be added manually; for a group with a set condition, when the M2M platform synchronizes a group terminal, the application platform will judge whether the group terminal meets the condition and add the group terminal into the group when the group terminal meets the condition. And the group terminal newly created by the application platform would come into effect after the verification has been approved by the M2M platform.

In the case that both the group and the group terminal already exist, they can be used in specific applications.

In a specific application, a corresponding relationship between a group id of a group in the M2M platform and a group id of a group in the application platform requires to be maintained, which may be embodied by a group corresponding relationship table, this table includes three dimensions: an application id, an M2M platform group id and an application platform group id. And during a message interaction between a terminal of the application platform and a terminal of the M2M platform in groups, the application platform group module can send an application message request to the M2M platform group module; the M2M platform module can initiate an application message to a terminal in a group corresponding to the application message request, and send an application processing result fed back by the terminal to the application platform group module.

A flowchart of the M2M platform changing a group and a group terminal may be shown in FIG. 2, FIG. 3 and FIG. 4 respectively.

Refer to FIG. 2, which is a flowchart of changing a group by an M2M platform according to an embodiment of the present invention, and the flow includes the following steps.

In step 201, an M2M platform determines an application to which a terminal belongs.

In step 202, the M2M platform divides different groups according to different application types and so on, and performs the operation for changing the group, the specific operation for changing the group probably relates to adding, modifying or deleting the group.

In step 203, the M2M platform sends a request for changing a group to the application platform.

In step 204, the application platform performs a corresponding operation for changing the group according to the request for changing the group from the M2M platform.

In step 205, the application platform returns a response for the request for changing the group which includes a group in the application platform.

In step 206, the M2M platform correspondingly stores group ids of itself and of the application platform.

Operations described in FIG. 2 relate to operations for a static group by the M2M platform group module, including addition, modification or deletion, and so on; also, a synchronizing module in the M2M platform may synchronizes a changed static group to the application platform.

Specifically, if the change operation is to add a group, the M2M platform may send a request for change a group to the application platform, an operation type carried in the request is a newly added opecode, a group id carried in the request is a group id of the M2M platform. The application platform newly adds a group according the received request, and returns response message for the request for changing the group to the M2M platform after a successful addition, a group id carried in the response message is a new group id of the application platform. The M2M platform may write the group id added to the M2M platform itself and the group id of the corresponding application platform into a group corresponding relationship table according to the response message from the application platform.

If the change operation is to add a new group, the M2M platform and the application platforms may modify the corresponding relationship of corresponding group ids in the group corresponding relationship table; if the change operation is to modify a group, the M2M platform may not operate on the corresponding relationship of group ids in the group corresponding relationship table; if the change operation is to delete a group, the M2M platform and the application platform need to delete the corresponding relationship of the corresponding group ids in the group corresponding relationship table.

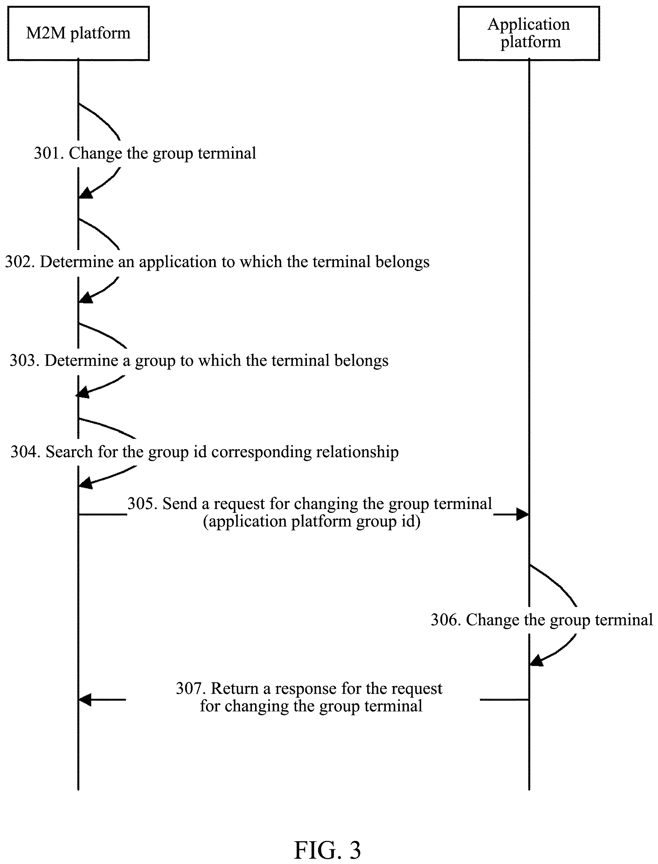

Refer to FIG. 3, which is a flowchart of changing a group terminal by an M2M platform according to an embodiment of the present invention, and this flow includes the following steps.

In step 301, the M2M platform determines to change a group terminal.

In step 302, the M2M platform determines an application to which the group terminal to be changed belongs.

In step 303, the M2M platform determines the group to which the terminal belongs according to an application to which the group terminal to be changed belongs, and performs corresponding operations such as addition, modification or deletion on a group terminal to be changed.

In step 304, the M2M platform searches for the corresponding relationship of group ids of the group terminal to be changed, and obtains an application platform group id corresponding to the group terminal to be changed.

In step 305, the M2M platform sends a request for changing a group terminal which includes an obtained application platform group id to the application platform.

In step 306, the application platform performs a corresponding operation of changing group terminal according to the request for changing the group terminal from the M2M platform.

In step 307, the application platform returns a response for the request for changing the group terminal to the M2M platform.

Operations described in FIG. 3 relate to operations including addition, modification or deletion and so on performed on a group terminal by the M2M platform.

Specifically, the M2M platform group module, after performing a change operation for the group terminal, may initiate a request for changing a group terminal to the application platform, wherein a group id carried in the message request is the group id of the application platform corresponding to the changed group searched in the group corresponding relationship table by the M2M platform.

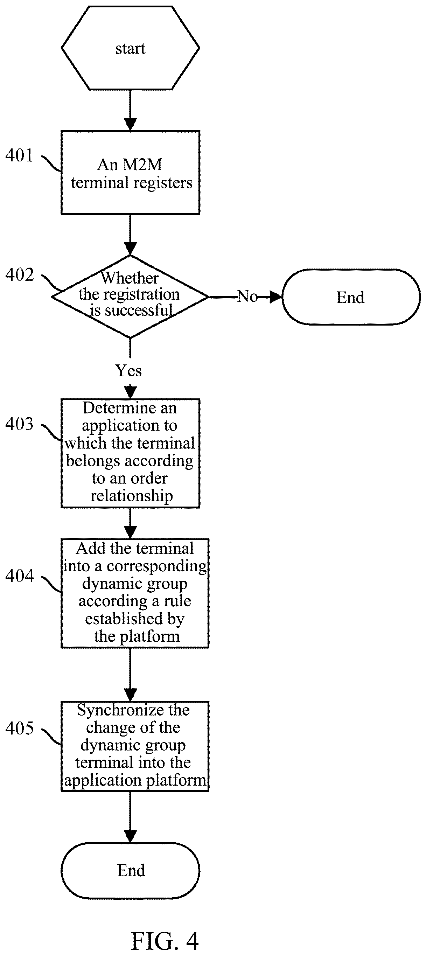

Refer to FIG. 4, which is a flowchart of adding a dynamic group terminal by the M2M platform according to an embodiment of the present invention, and the flow includes the following steps.

In step 401, the M2M terminal registers in the M2M platform.

In step 402, it is judged that whether the M2M terminal registers successfully, if yes, step 403 is executed; or else, the flow ends.

In step 403, the application to which the M2M terminal belongs is determined according to an order relation, etc.

In step 404, the M2M terminal is added into a corresponding dynamic group according a rule established by the M2M platform.

In step 405, a change of the dynamic group terminal is synchronized to the application platform.

The operation process of this step is similar to the operation principle of steps 304-307.

It can be seen from FIG. 4 that, the M2M terminal filtering module in the M2M platform may add a registered terminal according to a certain rule into a corresponding dynamic group, and a synchronizing module of the M2M platform may synchronize a group terminal to the application platform.

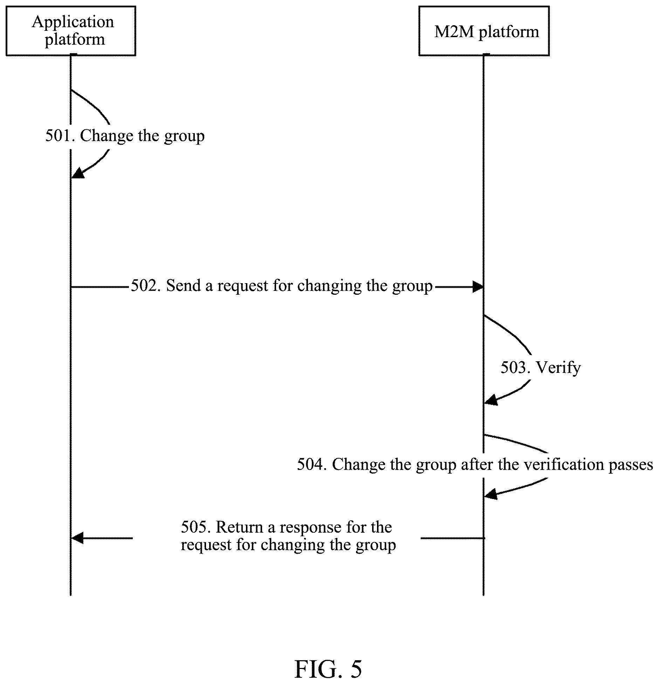

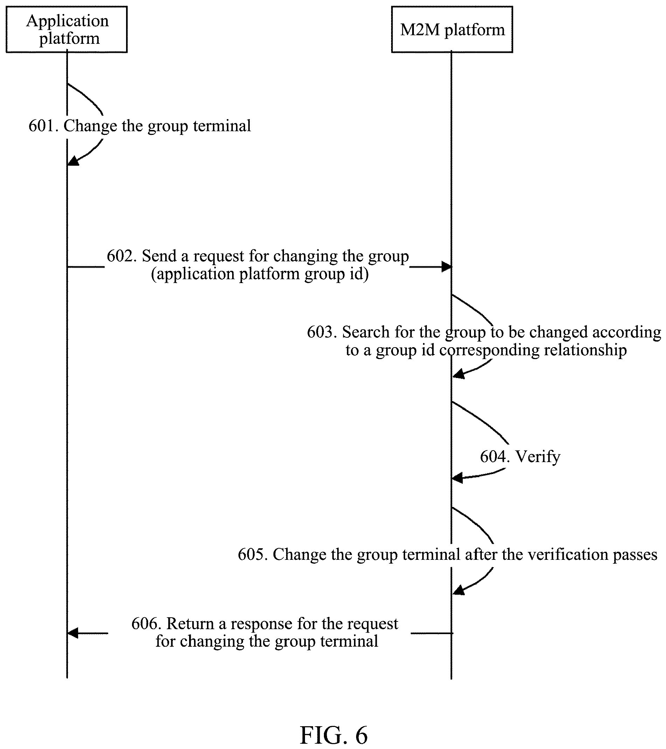

On the other hand, the application platform may perform change operations including addition, modification or deletion and so on for a static group actively; for a static group, the application platform can only maintain a group newly created by itself; for a dynamic group, the application platform can only look up and use but can not maintain it. Moreover, the application platform may perform change operations including addition, modification or deletion and so on for a static group terminal. The application platform can only maintain a group terminal newly added by itself. The above process of the application platform performing a change operation may be shown in FIG. 5, FIG. 6 respectively.

Refer to FIG. 5, which is a flowchart of changing a group by an application platform according to an embodiment of the present invention, and the flow includes the following steps.

In step 501, an application platform determines to change a group.

In step 502, the application platform sends a request for changing the group message to the M2M platform.

In step 503, the M2M platform verifies the request for changing the group from the application platform.

In step 504, after the verification has been approved, the M2M platform changes a group according the request from the application platform.

In step 505, the M2M platform returns a response for the request for changing the group to the application platform. The application platform receives the message and then determines that the verification for the request for changing the group has been approved, and thereby changes the group.

In FIG. 5, the request for changing the group sent by the application platform to the M2M platform includes an application platform group id and an opecode. If the change operation is to add a new group, the M2M platform group module adds a new group into the M2M platform, and writes the group id newly added by itself and the group id of the corresponding application platform into a group corresponding relationship table after the group is added successfully; if the change operation is to modify a group, the M2M platform may not perform any operation on the corresponding relationship of group ids in the group corresponding relationship table; if the change operation is to delete a group, the M2M platform and the application platform need to delete the corresponding relationship of the corresponding group ids in the group corresponding relationship table.

Refer to FIG. 6, which is a flowchart of changing a group terminal by an application platform according to an embodiment of the present invention, and the flow includes the following steps.

In step 601, the application platform determines to change a group terminal.

In step 602, the application platform sends a request for changing a group terminal to the M2M platform, wherein the message request includes an application platform group id.

In step 603, the M2M platform searched for the M2M platform group id corresponding to the received application platform group id according to the group id corresponding relationship, and determines a group which needs to be changed according to the group id of the M2M platform.

In step 604, the M2M platform verifies the request for changing the group terminal from the application platform.

In step 605, once the verification has been approved, the M2M platform changes the group terminal according the request from the application platform.

In step 606, the M2M platform returns a response for the request for changing the group terminal to the application platform. The application platform receives the response message and then determines that the verification for the request for changing the group terminal has been approved, and thereby changes the group terminal.

It should be noted that, the group id and the opecode and corresponding terminal information are included in the request for changing the group terminal sent to the M2M platform by the application platform.

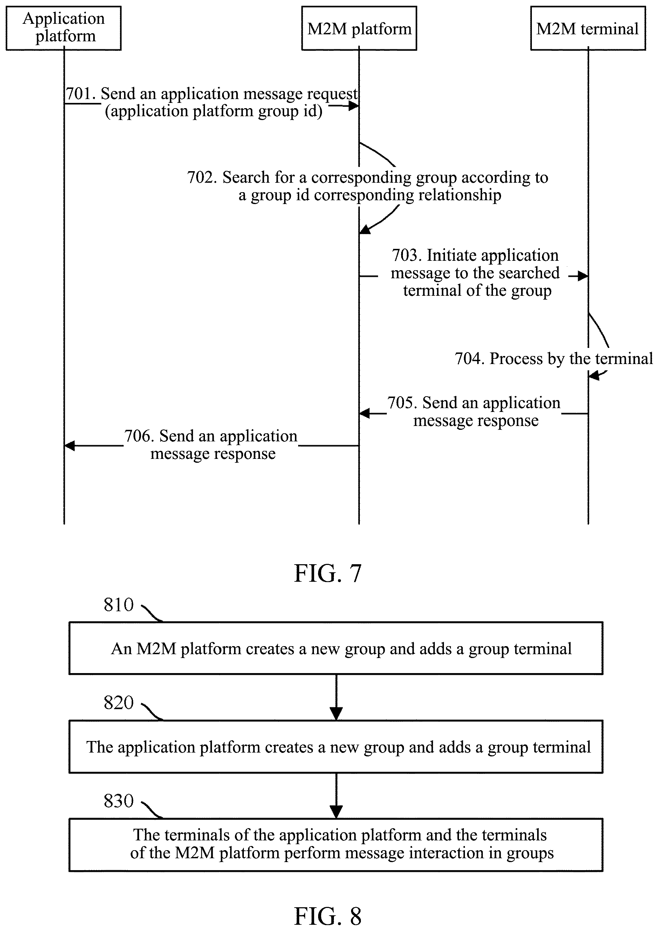

After the M2M platform and the application platform complete the above changes of the group and the group terminal, the application platform can initiate an application based on the group towards the group terminal in the M2M platform, the specific operating process is shown in FIG. 7.

Refer to FIG. 7, which is a flowchart of implementing an application by an M2M terminal based on groups according to an embodiment of the present invention, and the flow includes the following steps.

In step 701, an application platform sends an application message request to the M2M platform, including an application platform group id.

In step 702, the M2M platform searches for the group in the M2M platform corresponding to the received application platform group id according to group id corresponding relationship.

In step 703, the M2M platform initiates application message to a terminal in the searched group.

In step 704, an M2M terminal in the M2M platform receives the application message from the M2M platform and performs corresponding processing.

In step 705, the M2M terminal sends an application message response to the M2M platform and feeds back an application processing result, such as: system data reported according to requirements of the application platform.

In step 706, the M2M platform sends the received application message response to the application platform, and feeds back the application processing result of the M2M terminal.

In combination with each of above flows that can be implemented by the system as shown in FIG. 1, it can be known in that, the idea of implementing the operations by the M2M terminal based on groups may be shown in FIG. 8, which includes the following steps.

In step 810, an M2M platform newly creates a group and adds a group terminal.

In step 820, an application platform newly creates a group and adds a group terminal.

In step 830, the terminals of the application platform and the terminals of the M2M platform perform message interaction in groups.

It should be noted that, during group maintenance operations such as creating a group by the M2M platform and the application platform, a corresponding relationship exists between groups of the M2M platform and the application platform due to the processing such as group synchronization; therefore step 830 may be realized based on the corresponding relationship.

To summarize, grouping technology is adopted in the present invention, so that the application platform needs only to send message including a group id to the M2M platform, and the M2M platform may forward the received message to a corresponding terminal according to a group id corresponding relationship. Thus, it may ensure that a large amount of communication message would not be transmitted between the application platform and the M2M platform for the relatively independent M2M terminals, while a relatively little amount of communication message would be transmitted under the premise of dividing groups, therefore the processing efficiency of operations performed on the application by the application platform and the M2M platform may be effectively improved. Also, by way of dynamic groups and static groups provided by the M2M platform, a flexible management for the groups can be implemented by the M2M platform; in addition, the application platform may supplement groups actively, which facilitates the application platform using the groups to implement the applications more flexibly.

What is said above only shows the preferred embodiments of the present invention, but is not used to limit the protection scope of the present invention, and any modifications, equivalent alternatives and improvements made within the principle of the present invention are all included in the protection scope of the present invention.

## Claims

1. A method for implementing an application by an M2M, Machine-to-Machine/Man, terminal based on groups, **characterized in that** it comprises:
setting groups containing group terminals in both an M2M platform and an application platform, wherein there is a corresponding relationship between a group in the M2M platform and a group in the application platform;
based on the corresponding relationship, the terminals of the M2M platform and the terminal of the application platform interacting with message in groups, the interaction comprising: the application platform sending (701) an application message request including an application platform group id to the M2M platform; the M2M platform searching (702) for a group in the M2M platform corresponding to the received application platform group id according to the corresponding relationship; the M2M platform initiating (703) an application message to M2M terminals in the searched group; the M2M terminals in the M2M platform receiving (704) the application message from the M2M platform and performing (704) a processing corresponding to the application message; the M2M terminals sending (705) an application message response to the M2M platform and feeding (705) back an application processing result; the M2M platform sending (706) the received application message response to the application platform, and feeding (706) back the application processing result of the M2M terminals.

2. The method according to claim 1, wherein, the group set in the M2M platform and the group set in the application platform are formed by way of creating a new group and adding a group terminal.

3. The method according to claim 2, wherein,
a process of creating a new group in the M2M platform comprises:
dividing different terminals into different groups in the M2M platform and performing an operation of creating a new group, and then synchronizing an operation result to the application platform;
a process of adding a group terminal in the M2M platform comprises:
determining a group to which a group terminal to be added belongs in the M2M platform, and performing an operation of adding a group terminal for the group terminal to be added, and then synchronizing an operation result to the application platform.

4. The method according to claim 3, wherein, when the group terminal added in the M2M platform is a dynamic group terminal, the process of adding comprises:
after the terminal registers in the M2M platform successfully, adding the terminal into a corresponding dynamic group according to an application to which the terminal belongs and a rule established by the M2M platform.

5. The method according to claim 2, wherein,
a process of creating a new group in the application platform comprises:
for a new group to be created, the application platform initiating a verification request to the M2M platform, the M2M platform creating a new group according to the request from the application platform after the verification has been approved, and permitting the application platform to create a new group;
a process of adding a group terminal into the application platform comprises:
for a group terminal to be added, the application platform initiating a verification request to the M2M platform, the M2M platform adding a group terminal according to the request from the application platform after the verification has been approved, and permitting the application platform to add a group terminal.

6. A system for implementing an application by an M2M, Machine-to-Machine/Man, terminal based on groups, **characterized in that** it comprises an M2M terminal filtering module, an M2M platform group module, a synchronizing module and an application platform group module; wherein the synchronizing module is set in both the M2M platform and the application platform;
the M2M platform group module is used to maintain groups containing group terminals in the M2M platform;
the application platform group module is used to maintain groups containing group terminals in the application platform;
the synchronizing module is used to synchronize a group in the M2M platform and a group in the application platform during a maintenance process;
the M2M terminal filtering module is used to implement a message interaction between terminals of the application platform and terminals of the M2M platform in groups, according to a corresponding relationship between a group in the M2M platform and a group in the application platform generated during a synchronization process performed by the synchronizing module;
wherein the application platform group module is further used to send an application message request including an application platform group id to the M2M platform;
the M2M terminal filtering module is further used to search for a group in the M2M platform corresponding to the received application platform group id according to the corresponding relationship;
the M2M platform group module is further used to initiate an application message to M2M terminals in the searched group, and to feed back an application processing result from the M2M terminals.

7. The system according to claim 6, wherein,
maintenance functions of the M2M platform group module and the application group module are implemented by way of creating a new group and adding a group terminal.

8. The system according to claim 7, wherein,
in a process of creating a new group in the M2M platform,
the M2M platform group module is used to divide different terminals into different groups, and perform an operation of creating a new group;
the synchronizing module is used to synchronize an operation result of the M2M platform group module creating a new group to the application platform;
in a process of adding a group terminal into the M2M platform,
the M2M platform group module is used to determine a group to which a group terminal to be added belongs, and perform an operation of adding a group terminal for the group terminal to be added;
the synchronizing module is used to synchronize an operation result of the M2M platform group module adding a group terminal to the application platform.

9. The system according to claim 8, wherein, when the added group terminal is a dynamic group terminal, the M2M platform group module is used to:
after the terminal registers in the M2M platform successfully, add the terminal into a corresponding dynamic group according to an application to which the terminal belongs and a rule established by the M2M platform.

10. The system according to claim 7, wherein,
in a process of creating a new group in the application platform,
the application platform group module is used to initiate a verification request to the M2M platform for a new group to be created, and create a new group after the verification has been approved by the M2M platform;
in a process of adding a group terminal into the application platform,
the application platform group module is used to initiate a verification request to the M2M platform for a group terminal to be added, and add a group terminal after the verification has been approved by the M2M platform.

## Patentansprüche

1. Verfahren zum Implementieren einer Anwendung durch ein M2M-Endgerät (Maschine-Maschine/Mensch) basierend auf Gruppen, **dadurch gekennzeichnet, dass** es Folgendes umfasst:
Einstellgruppen, die Gruppen-Endgeräte sowohl in einer M2M-Plattform als auch in einer Anwendungsplattform enthalten, wobei eine entsprechende Beziehung zwischen einer Gruppe in der M2M-Plattform und einer Gruppe in der Anwendungsplattform besteht;
wobei basierend auf der entsprechenden Beziehung, die Endgeräte der M2M-Plattform und das Endgerät der Anwendungsplattform mit Nachrichten in den Gruppen interagieren, wobei die Interaktion umfasst: dass die Anwendungsplattform eine Anwendungsnachrichtenanforderung sendet (701), die eine Anwendungsplattform-Gruppen-ID für die M2M-Plattform einschließt; dass die M2M-Plattform nach einer Gruppe in der M2M-Plattform sucht (702), die der empfangenen Anwendungsplattform-Gruppen-ID gemäß der entsprechenden Beziehung entspricht; dass die M2M-Plattform eine Anwendungsnachricht an M2M-Endgeräte in der gesuchten Gruppe initiiert (703); dass die M2M-Endgeräte in der M2M-Plattform die Anwendungsnachricht von der M2M-Plattform empfangen (704) und eine der Anwendungsnachricht entsprechende Verarbeitung durchführen (704); dass die M2M-Endgeräte eine Anwendungsnachrichtenantwort an die M2M-Plattform senden (705) und ein Anwendungsverarbeitungsergebnis zurückgeben (705); dass die M2M-Plattform die empfangene Anwendungsnachrichtenantwort an die Anwendungsplattform sendet (706) und das Anwendungsverarbeitungsergebnis der M2M-Endgeräte zurückgibt (706).

2. Verfahren nach Anspruch 1, wobei der Gruppensatz in der M2M-Plattform und der Gruppensatz in der Anwendungsplattform durch Erzeugen einer neuen Gruppe und Hinzufügen eines Gruppenendgerätsgebildet werden.

3. Verfahren nach Anspruch 2, wobei
ein Prozess zum Erzeugen einer neuen Gruppe in der M2M-Plattform umfasst:
Aufteilen unterschiedlicher Endgeräte in unterschiedliche Gruppen in der M2M-Plattform und Durchführen einer Operation zum Erzeugen einer neuen Gruppe und dann Synchronisieren eines Operationsergebnisses mit der Anwendungsplattform;
wobei ein Prozess zum Hinzufügen eines Gruppenendgeräts zur M2M-Plattform umfasst:
Bestimmen einer Gruppe, zu der ein hinzuzufügendes Gruppenendgerät in der M2M-Plattform gehört, und Durchführen einer Operation zum Hinzufügen eines Gruppenendgeräts für das hinzuzufügende Gruppenendgerät und dann Synchronisieren eines Operationsergebnisses mit der Anwendungsplattform.

4. Verfahren nach Anspruch 3, wobei, wenn das Gruppenendgerät, das der M2M-Plattform hinzugefügt wurde, ein dynamisches Gruppenendgerät ist, wobei der Prozess des Hinzufügens umfasst:
nachdem sich das Endgerät erfolgreich auf der M2M-Plattform angemeldet hat, Hinzufügen des Endgeräts zu einer entsprechenden dynamischen Gruppe gemäß einer Anwendung, zu der das Endgerät gehört, und einer Regel, die durch die M2M-Plattform erstellt wird.

5. Verfahren nach Anspruch 2, wobei
ein Prozess zum Erzeugen einer neuen Gruppe in der Anwendungsplattform umfasst:
für eine neu zu erzeugende Gruppe, Initiieren, durch die Anwendungsplattform einer Überprüfungsanforderung an die M2M-Plattform, wobei die M2M-Plattform eine neue Gruppe gemäß der Anforderung von der Anwendungsplattform erstellt, nachdem die Überprüfung genehmigt wurde, und der Anwendungsplattform erlaubt, eine neue Gruppe zu erzeugen;
wobei ein Prozess zum Hinzufügen eines Gruppenendgeräts zur Anwendungsplattform umfasst:
für ein hinzuzufügendes Gruppenendgerät, Initiieren, durch die Anwendungsplattform, einer Überprüfungsanforderung an die M2M-Plattform, wobei die M2M-Plattform ein neues Gruppenendgerät gemäß der Anforderung von der Anwendungsplattform erstellt, nachdem die Überprüfung genehmigt wurde, und der Anwendungsplattform erlaubt, ein Gruppenendgerät hinzuzufügen.

6. System zum Implementieren einer Anwendung durch ein M2M-Endgerät (Maschine-Maschine/Mensch), das auf Gruppen basiert, **dadurch gekennzeichnet, dass** es ein M2M-Endgerätfiltermodul, ein M2M-Plattformgruppenmodul, ein Synchronisationsmodul und ein Anwendungsplattformgruppenmodul umfasst; wobei das Synchronisationsmodul sowohl in der M2M-Plattform als auch in der Anwendungsplattform eingestellt ist;
das M2M-Plattformgruppenmodul verwendet wird, um Gruppen, die Gruppenendgeräte enthalten, auf der M2M-Plattform zu warten;
das Anwendungsplattformgruppenmodul verwendet wird, um Gruppen, die Gruppenendgeräte enthalten, auf der Anwendungsplattform zu warten;
das Synchronisationsmodul verwendet wird, um eine Gruppe in der M2M-Plattform und eine Gruppe in der Anwendungsplattform während eines Wartungsprozesses zu synchronisieren;
das M2M-Endgerätfiltermodul verwendet wird, um eine Nachrichteninteraktion zwischen Endgeräten der Anwendungsplattform und Endgeräten der M2M-Plattform in Gruppen gemäß einer entsprechenden Beziehung zwischen einer Gruppe in der M2M-Plattform und einer Gruppe in der Anwendungsplattform zu implementieren, die während eines Synchronisationsprozesses, der durch das Synchronisationsmodul durchgeführt wird, zu erzeugen;
wobei das Anwendungsplattform-Gruppenmodul weiter verwendet wird, um eine Anwendungsnachrichtenanforderung einschließlich einer Anwendungsplattform-Gruppen-ID an die M2M-Plattform zu senden;
wobei das M2M-Endgerätfiltermodul weiter verwendet wird, um nach einer Gruppe in der M2M-Plattform zu suchen, die der empfangenen Anwendungsplattform-Gruppen-ID gemäß der entsprechenden Beziehung entspricht;
wobei das M2M-Plattformgruppenmodul weiter verwendet wird, um eine Anwendungsnachricht an M2M-Endgeräte in der gesuchten Gruppe zu initiieren und ein Anwendungsverarbeitungsergebnis von den M2M-Endgeräten zurückzugeben.

7. System nach Anspruch 6, wobei
die Wartungsfunktionen des M2M-Plattform-Gruppenmoduls und des Anwendungsgruppenmoduls durch Erzeugen einer neuen Gruppe und Hinzufügen eines Gruppenendgeräts implementiert werden.

8. System nach Anspruch 7, wobei
in einem Prozess zum Erzeugen einer neuen Gruppe in der M2M-Plattform
das M2M-Plattformgruppenmodul verwendet wird, um unterschiedliche Endgeräte in unterschiedliche Gruppen aufzuteilen und eine Operation zum Erzeugen einer neuen Gruppe durchzuführen;
das Synchronisationsmodul verwendet wird, um ein Operationsergebnis des M2M-Plattformgruppenmoduls zu synchronisieren, das eine neue Gruppe für die Anwendungsplattform erzeugt;
wobei in einem Prozess zum Hinzufügen eines Gruppenendgeräts zur M2M-Plattform
das M2M-Plattformgruppenmodul verwendet wird, um eine Gruppe zu bestimmen, zu der ein hinzuzufügendes Gruppenendgerät gehört, und um eine Operation zum Hinzufügen eines Gruppenendgerätsfür das hinzuzufügende Gruppenendgerät durchzuführen;
wobei das Synchronisationsmodul verwendet wird, um ein Operationsergebnis des M2M-Plattformgruppenmoduls zu synchronisieren, indem ein Gruppenendgerät der Anwendungsplattform hinzugefügt wird.

9. System nach Anspruch 8, wobei, wenn das hinzugefügte Gruppenendgerät ein dynamisches Gruppenendgerät ist, das M2M-Plattformgruppenmodul verwendet wird zum:
nachdem sich das Endgerät erfolgreich auf der M2M-Plattform angemeldet hat, Hinzufügen des Endgeräts zu einer entsprechenden dynamischen Gruppe gemäß einer Anwendung, zu der das Endgerät gehört, und einer Regel, die durch die M2M-Plattform erstellt wird.

10. System nach Anspruch 7, wobei
in einem Prozess des Erzeugens einer neuen Gruppe in der Anwendungsplattform
das Anwendungsplattformgruppenmodul verwendet wird, um eine Überprüfungsanforderung an die M2M-Plattform für eine zu erzeugende neue Gruppe zu initiieren und eine neue Gruppe zu erzeugen, nachdem die Überprüfung durch die M2M-Plattform genehmigt wurde;
in einem Prozess zum Hinzufügen eines Gruppenendgerätszur Anwendungsplattform
das Anwendungsplattformgruppenmodul verwendet wird, um eine Überprüfungsanforderung an die M2M-Plattform für ein hinzuzufügendes Gruppenendgerät zu initiieren und ein neues Gruppenendgerät hinzuzufügen, nachdem die Überprüfung durch die M2M-Plattform genehmigt wurde.

## Revendications

1. Procédé de mise en oeuvre d'une application par un M2M, terminal de communication de machine à machine/homme, basé sur des groupes, **caractérisé en ce qu'**il comprend :
le réglage de groupes contenant des terminaux de groupes dans à la fois une plateforme M2M et une plateforme d'application, dans lequel il y a une relation correspondante entre un groupe de la plateforme M2M et un groupe de la plateforme d'application ;
sur la base de la relation correspondante, les terminaux de la plateforme M2M et le terminal de la plateforme d'application interagissant avec un message dans des groupes, l'interaction comprenant: la plateforme d'application qui envoie (701) une demande de message d'application incluant un ID de groupe de plateforme d'application à la plateforme M2M ; la plateforme M2M qui recherche (702) un groupe de la plateforme M2M correspondant à l'ID du groupe de plateforme d'application reçu selon la relation correspondante ; la plateforme M2M qui initie (703) un message d'application vers les terminaux M2M dans le groupe recherché ; les terminaux M2M de la plateforme M2M qui reçoivent (704) le message d'application de la plateforme M2M et effectuent (704) un traitement correspondant au message d'application ; les terminaux M2M qui envoient (705) une réponse au message d'application à la plateforme M2M et renvoient (705) un résultat de traitement d'application; la plateforme M2M qui envoie (706) la réponse de message d'application reçue à la plateforme d'application et renvoient (706) le résultat de traitement d'application des terminaux M2M.

2. Procédé selon la revendication 1, dans lequel l'ensemble de groupes de la plateforme M2M et l'ensemble de groupes de la plateforme d'application sont forméspar création d'un nouveau groupe et l'addition d'un terminal de groupe.

3. Procédé selon la revendication 2, dans lequel :
un procédé de création d'un nouveau groupe dans la plateforme M2M comprend :
la division de différents terminaux en différents groupes de la plateforme M2M et la réalisation d'une opération de création d'un nouveau groupe, puis la synchronisation d'un résultat de l'opération à la plateforme d'application ;
un procédé d'addition d'un terminal de groupe dans la plateforme M2M comprend :
la détermination d'un groupe auquel un terminal de groupe à ajouter appartient dans la plateforme M2M et la réalisation d'une opération d'addition d'un terminal de groupe pour le terminal de groupe à ajouter, puis la synchronisation d'un résultat de l'opération à la plateforme d'application.

4. Procédé selon la revendication 3, dans lequel, lorsque le terminal de groupe ajouté dans la plateforme M2M est un terminal de groupe dynamique, le procédé d'addition comprend :
une fois que le terminal s'enregistre dans la plateforme M2M avec succès, l'addition du terminal dans un groupe dynamique correspondant selon une application à laquelle le terminal appartient et une règle établie par la plateforme M2M.

5. Procédé selon la revendication 2, dans lequel :
un procédé de création d'un nouveau groupe dans la plateforme d'application comprend :
pour un nouveau groupe à créer, la plateforme d'application qui initie une demande de vérification à la plateforme M2M, la plateforme M2M créant un nouveau groupe selon la demande de la plateforme d'application une fois que la vérification a été approuvée et permettant à la plateforme d'application de créer un nouveau groupe ;
un procédé d'addition d'un terminal de groupe dans la plateforme d'application comprend :
pour un terminal de groupe à ajouter, la plateforme d'application qui initie une demande de vérification à la plateforme M2M, la plateforme M2M ajoutant un terminal de groupe selon la demande de la plateforme d'application une fois que la vérification a été approuvée et permettant à la plateforme d'application d'ajouter un terminal de groupe.

6. Système de mise en oeuvre d'une application par un M2M, terminal de communication de machine à machine/homme, sur la base de groupes, **caractérisé en ce qu'**il comprend un module de filtrage de terminal M2M, un module de groupes de plateforme M2M, un module de synchronisation et un module de groupes de plateforme d'application, dans lequel le module de synchronisation est réglé dans à la fois la plateforme M2M et la plateforme d'application ;
le module de groupes de plateforme M2M est utilisé pour maintenir des groupes contenant des terminaux de groupes dans la plateforme M2M ;
le module de groupes de plateforme d'application est utilisé pour maintenir des groupes contenant des terminaux de groupes dans la plateforme d'application ;
le module de synchronisation est utilisé pour synchroniser un groupe dans la plateforme M2M et un groupe dans la plateforme d'application au cours d'un procédé d'entretien;
le module de filtrage de terminaux M2M est utilisé pour mettre en oeuvre une interaction de message entre des terminaux de la plateforme d'application et des terminaux de la plateforme M2M en groupes selon une relation correspondante entre un groupe de la plateforme M2M et un groupe de la plateforme d'application généré au cours d'un processus de synchronisation effectué parle module de synchronisation ;
dans lequel le module de groupes de plateforme d'application est en outre utilisé pour envoyer une demande de message d'application incluant un ID de groupe de plateforme d'application à la plateforme M2M ;
le module de filtrage de terminaux M2M est en outre utilisé pour rechercher un groupe dans la plateforme M2M correspondant à l'ID de groupe de plateforme d'application reçu selon la relation correspondante ;
le module de groupes de plateforme M2M est en outre utilisé pour initier un message d'application pour les terminaux M2M dans le groupe recherché et pour renvoyer un résultat de traitement d'application depuis les terminaux M2M.

7. Système selon la revendication 6, dans lequel :
des fonctions d'entretien du module de groupes de plateforme M2M et du module de groupes d'application sont mises en oeuvre en créant un nouveau groupe et en ajoutant un terminal de groupe.

8. Système selon la revendication 7, dans lequel :
dans un processus de création d'un nouveau groupe dans la plateforme M2M,
le module de groupes de plateforme M2M est utilisé pour diviser différents terminaux en différents groupes et effectuer une opération de création d'un nouveau groupe ;
le module de synchronisation est utilisé pour synchroniser un résultat d'opération du module de groupes de plateforme M2M en créant un nouveau groupe dans la plateforme d'application;
dans un procédé d'addition d'un terminal de groupe dans la plateforme M2M,
le module de groupe de plateforme M2M est utilisé pour déterminer un groupe auquel un terminal de groupe à ajouter appartient et effectuer une opération d'addition d'un terminal de groupe pour le terminal de groupe à ajouter ;
le module de synchronisation est utilisé pour synchroniser un résultat d'opération du module de groupe de plateforme M2M ajoutant un terminal de groupe à la plateforme d'application.

9. Système selon la revendication 8, dans lequel, lorsque le terminal de groupe ajouté est un terminal de groupe dynamique, le module de groupe de plateforme M2M est utilisé pour :
une fois que le terminal s'enregistre dans la plateforme M2M avec succès, ajouter le terminal dans un groupe dynamique correspondant selon une application à laquelle le terminal appartient et une règle établie par la plateforme M2M.

10. Procédé selon la revendication 7, dans lequel :
dans un procédé de création d'un nouveau groupe dans la plateforme d'application,
le module de groupes de plateforme d'application est utilisé pour initier une demande de vérification auprès de la plateforme M2M pour un nouveau groupe à créer et créer un nouveau groupe une fois que la vérification a été approuvée par la plateforme M2M ;
dans un procédé d'addition d'un terminal de groupe dans la plateforme d'application,
le module de groupes de plateforme d'application est utilisé pour initier une demande de vérification auprès de la plateforme M2M pour un terminal de groupe à ajouter et ajouter un terminal de groupe une fois que la vérification a été approuvée par la plateforme M2M.
